# DEMANDE DE BREVET EUROPEEN

(11) **EP 4 628 779 A1**
(43) Date de publication de la demande: **08.10.2025**
(21) Numéro de dépôt: 25164793.9
(22) Date de dépôt: 19.03.2025
(51) Int. Cl.: F17C 9/04

(54) **SYSTÈME D'ALIMENTATION EN GAZ POUR APPAREILS CONSOMMATEURS DE GAZ À HAUTE ET BASSE PRESSIONS**

(30) Priorité: 02.04.2024 FR 2403360
(71) Demandeur: GAZTRANSPORT ET TECHNIGAZ, 78470 Saint-Rémy-lès-Chevreuse (FR)
(72) Inventeur: AOUN, Bernard, 78470 Saint Rémy lès Chevreuse (FR); DI CAIRANO, Luca, 78470 Saint Rémy lès Chevreuse (FR); BOUMEDIENE, Sidi, 78470 Saint Rémy lès Chevreuse (FR)
(74) Mandataire: Ex Materia

(57) **Abrégé**

La présente invention concerne un système d'alimentation (1) en gaz d'un appareil consommateur de gaz à haute pression (4) d'un ouvrage flottant (20) comprenant au moins une cuve (8), comprenant :
- au moins un premier circuit d'alimentation (2) de l'appareil consommateur haute pression (4), comprenant un premier échangeur de chaleur (6), un deuxième échangeur de chaleur (7), une pompe (10) ;
caractérisé en ce que le système d'alimentation (1) comprend un système de pré-refroidissement (17) du premier échangeur de chaleur (6) configuré pour prélever du gaz à l'état liquide dans la cuve (8), le système de pré-refroidissement (17) comprenant une ligne de pré-refroidissement (19) et une vanne de régulation (21) de la circulation du gaz au sein de la ligne de pré-refroidissement (19).

## Description

La présente invention se rapporte au domaine des navires de stockage et/ou de transport de gaz à l'état liquide et concerne plus particulièrement un système d'alimentation en gaz pour appareils consommateurs compris au sein de tels navires.

Au cours d'un trajet effectué par un navire comprenant une cuve de gaz à l'état liquide destiné à être consommé et/ou à être livré vers un point de destination, ledit navire peut être apte à utiliser au moins une partie dudit gaz à l'état liquide afin d'alimenter au moins l'un de ses moteurs, et ce via un système d'alimentation en gaz. C'est le cas des navires pourvus d'un moteur de propulsion de type ME-GI. Afin d'alimenter ce type de moteur, le gaz doit être comprimé à très haute pression par des compresseurs spéciaux aptes à comprimer le gaz jusqu'à 300 bars, mais de tels compresseurs sont chers, engendrent des frais de maintenance conséquents et induisent des vibrations au sein du navire.

Une alternative à l'installation de ces compresseurs à haute pression est de vaporiser le gaz sous forme liquide à 300 bars avant que ce dernier ne soit envoyé au moteur de propulsion. Une telle solution ne permettant pas d'éliminer le gaz sous forme vapeur (ou BOG, qui en anglais signifie « boil-off gas ») se formant naturellement au sein d'une cuve contenant au moins partiellement la cargaison, des compresseurs basse pression peuvent être installés pour alimenter un moteur auxiliaire, capable de consommer le gaz sous forme vapeur à basse pression.

L'utilisation d'un tel système d'alimentation en gaz nécessite cependant une préparation, qui correspond à un pré-refroidissement, au cours de laquelle certains de ses composants sont amenés à une température inférieure à une valeur seuil à partir de laquelle peut débuter l'alimentation des moteurs. La taille des composants qu'il est nécessaire d'amener à température est susceptible de faire varier le temps nécessaire à un tel pré-refroidissement ; ainsi, la préparation de composants de taille importante retardera la mise en action du système d'alimentation en gaz, même si de plus petits composants sont déjà à température.

La présente invention vise à pallier cet inconvénient en proposant un système d'alimentation en gaz au sein duquel le temps nécessaire à la mise en température de composants de taille importante, comme par exemple un échangeur de chaleur, est réduit de sorte à accélérer le temps de mise en fonctionnement du système d'alimentation en gaz.

La présente invention a ainsi pour principal objet un système d'alimentation en gaz d'au moins un appareil consommateur de gaz à haute pression et d'au moins un appareil consommateur de gaz à basse pression d'un ouvrage flottant comprenant au moins une cuve configurée pour contenir le gaz, le système d'alimentation comprenant : au moins un premier circuit d'alimentation en gaz de l'appareil consommateur de gaz à haute pression, comprenant au moins une première pompe configurée pour pomper le gaz prélevé à l'état liquide dans la cuve, au moins un premier échangeur de chaleur, un deuxième échangeur de chaleur, une deuxième pompe disposée entre le premier échangeur de chaleur et le deuxième échangeur de chaleur et au moins un évaporateur haute pression configuré pour évaporer le gaz circulant dans le premier circuit d'alimentation en gaz ; au moins un deuxième circuit d'alimentation en gaz de l'appareil consommateur de gaz à basse pression, comprenant au moins un compresseur configuré pour comprimer du gaz prélevé à l'état vapeur dans la cuve jusqu'à une pression de fonctionnement de l'appareil consommateur de gaz à basse pression. Selon l'invention, le système d'alimentation comprend un système de pré-refroidissement du premier échangeur de chaleur configuré pour prélever du gaz à l'état liquide dans la cuve, le système de pré-refroidissement comprenant une ligne de pré-refroidissement raccordée au premier circuit d'alimentation entre le premier échangeur de chaleur et la deuxième pompe, le système de pré-refroidissement comprenant au moins une vanne de régulation de la circulation du gaz au sein de la ligne de pré-refroidissement.

Le système d'alimentation selon l'invention est par exemple destiné à équiper un ouvrage flottant en vue de fournir du gaz à ses appareils consommateurs. Plus particulièrement, le premier circuit d'alimentation en gaz permet de subvenir aux besoins en carburant de l'appareil consommateur de gaz à haute pression. Ce dernier peut par exemple être le moyen de propulsion de l'ouvrage flottant, par exemple un moteur ME-GI. Le premier circuit d'alimentation s'étend de la cuve jusqu'à l'appareil consommateur de gaz à haute pression. La première pompe est installée en fond de cuve et assure le pompage du gaz à l'état liquide afin que celui-ci puisse circuler dans le premier circuit d'alimentation.

Le gaz devant être à l'état vapeur pour pouvoir alimenter l'appareil consommateur de gaz à haute pression, l'évaporateur haute pression garantit l'évaporation du gaz avant sa fourniture à l'appareil consommateur de gaz à haute pression. L'évaporateur haute pression est le siège d'un échange de calories entre le gaz à l'état liquide circulant dans le premier circuit d'alimentation et un fluide caloporteur, par exemple de l'eau glycolée, de l'eau de mer ou de la vapeur d'eau. Cette dernière doit être à une température suffisamment élevée pour créer un changement d'état du gaz afin que ce dernier passe à l'état vapeur ou supercritique afin d'alimenter l'appareil consommateur de gaz à haute pression.

Avant que le gaz à l'état liquide circulant dans le premier circuit d'alimentation ne soit vaporisé par le biais de l'évaporateur haute pression, le gaz à l'état liquide traverse le premier échangeur de chaleur, puis le deuxième échangeur de chaleur. Pour cela, le premier échangeur de chaleur et le deuxième échangeur de chaleur sont liés l'un à l'autre par une portion du premier circuit d'alimentation afin que le gaz à l'état liquide puisse traverser les deux échangeurs de chaleur de manière successive. La température dudit gaz à l'état liquide tend ainsi à augmenter avant le passage de celui-ci à travers l'évaporateur haute pression. Ainsi, le gaz circulant dans le premier circuit d'alimentation peut être dans un état diphasique en sortie du deuxième échangeur de chaleur.

D'une manière générale, le gaz contenu dans la cuve peut passer de manière naturelle, ou forcée par l'ouvrage flottant, à l'état vapeur. Le gaz au sein de la cuve passant à l'état vapeur doit être évacué afin de ne pas créer de surpression au sein de la cuve. Une telle fonction est assurée par le deuxième circuit d'alimentation en gaz de l'appareil consommateur de gaz à basse pression. Un tel deuxième circuit d'alimentation s'étend de la cuve jusqu'à l'appareil consommateur de gaz à basse pression. Ce dernier peut par exemple être un moteur auxiliaire tel qu'un générateur électrique. Le compresseur disposé sur le deuxième circuit d'alimentation est chargé d'aspirer le gaz présent dans le ciel de la cuve afin de pouvoir à la fois alimenter l'appareil consommateur de gaz à basse pression, mais aussi de réguler la pression au sein de la cuve. En sortie du compresseur, le gaz à l'état vapeur peut alimenter l'appareil consommateur de gaz à basse pression.

Le premier échangeur de chaleur, le deuxième échangeur de chaleur et l'évaporateur haute pression sont ici des échangeurs thermiques physiquement distincts. À titre d'exemple, le premier échangeur de chaleur est un recondenseur et le deuxième échangeur de chaleur est un pré-refroidisseur. La deuxième pompe permet d'augmenter la pression du gaz à l'état liquide circulant dans le premier circuit d'alimentation, et ce afin que celui-ci présente une pression compatible pour l'alimentation de l'appareil consommateur de gaz à haute pression.

Le système d'alimentation comprend un système de pré-refroidissement du premier échangeur de chaleur qui est utilisé afin de mettre à température ce premier échangeur de chaleur au cours d'une étape de préparation ou étape de pré-refroidissement de l'ouvrage flottant. Au cours de l'étape de préparation, la température du premier échangeur de chaleur est par exemple abaissée à environ - 140 °C. Une telle étape de préparation est usuellement réalisée lorsque l'ouvrage flottant est à quai, préalablement à l'alimentation de ses appareils consommateurs. À cet effet, le système d'alimentation est configuré pour prélever du gaz à l'état liquide dans la cuve, le cas échéant en le faisant circuler dans une portion du premier circuit d'alimentation s'étendant entre la première pompe et le premier échangeur de chaleur. Le système d'alimentation comprend la ligne de pré-refroidissement, qui est raccordée au premier circuit d'alimentation en sortie du premier échangeur de chaleur et en amont de la deuxième pompe, et qui sert à évacuer hors du premier échangeur de chaleur le gaz l'ayant traversé au titre du pré-refroidissement. Le passage du gaz au sein de cette ligne de pré-refroidissement est régie par la présence de la vanne de régulation du système de pré-refroidissement. Cette vanne de régulation présente une configuration ouverte et une configuration fermée, un passage de gaz dans la ligne de pré-refroidissement étant autorisé dans la configuration ouverte de la vanne de régulation. La présence du circuit de pré-refroidissement permet de pré-refroidir le premier échangeur de chaleur indépendamment d'un pré-refroidissement de la deuxième pompe.

Le système de pré-refroidissement permet d'abaisser la température du premier échangeur de chaleur préalablement à son fonctionnement au sein du système d'alimentation. Pour ce faire, le système de pré-refroidissement augmente le débit de gaz traversant le premier échangeur de chaleur, de sorte à accélérer le temps nécessaire à sa mise en température. Le système de pré-refroidissement permet par exemple de doubler ou de tripler le débit de gaz circulant au sein du premier échangeur de chaleur comparativement à un débit de gaz usuellement utilisé lors d'un fonctionnement du premier échangeur de chaleur en vue d'alimenter l'appareil consommateur de gaz à haute pression. Ainsi, le temps nécessaire à la préparation du système d'alimentation dans son ensemble est réduite, le premier échangeur de chaleur pouvant être amené à température dans un laps de temps similaire à une durée nécessaire pour amener en température d'autres composants moins imposants du système d'alimentation, comme par exemple la deuxième pompe.

Selon une caractéristique optionnelle de l'invention, le premier circuit d'alimentation comprend une première valve disposée entre la première pompe et le premier échangeur de chaleur et une deuxième valve disposée entre le premier échangeur de chaleur et la deuxième pompe, la ligne de pré-refroidissement étant raccordée au premier circuit d'alimentation entre le premier échangeur de chaleur et la deuxième valve.

La première valve et la deuxième valve sont constitutives d'un circuit de contournement du premier échangeur de chaleur. Un tel circuit de contournement, associé au système de pré-refroidissement, permet notamment d'effectuer une purge d'une première passe de l'échangeur de chaleur, qui est disposée entre ces deux valves. Dans un tel cas de contournement du premier échangeur de chaleur, il est possible de simultanément pré-refroidir le premier échangeur de chaleur et alimenter en gaz la deuxième pompe.

L'utilisation du circuit de contournement permet par ailleurs d'effectuer des opérations de maintenance sur le premier échangeur de chaleur.

Selon une caractéristique optionnelle de l'invention, le système de pré-refroidissement est configuré pour que la ligne de pré-refroidissement débouche dans une portion inférieure de la cuve.

Selon une caractéristique optionnelle de l'invention, le système de pré-refroidissement est configuré pour que la ligne de pré-refroidissement débouche dans une portion supérieure de la cuve.

En d'autres termes, la ligne de pré-refroidissement s'étend entre le premier circuit d'alimentation et la cuve. La cuve comprend une portion inférieure dédiée au stockage de gaz à l'état liquide et une portion supérieure dédiée au stockage de gaz évaporé à partir du gaz à l'état liquide, la portion inférieure correspondant à un fond de cuve et la portion supérieure correspondant à un ciel de cuve. La ligne de pré-refroidissement peut, selon différents modes de réalisation, déboucher soit en fond de cuve soit dans le ciel de cuve. Dans ces deux cas, la ligne de pré-refroidissement débouche directement dans la cuve, c'est-à-dire qu'elle n'est raccordée à aucune autre conduite du système d'alimentation en vue de déboucher dans la cuve.

Selon une caractéristique optionnelle de l'invention, le système d'alimentation comprend une ligne de retour de gaz connectée au deuxième circuit d'alimentation et configurée pour ramener le gaz jusqu'à la cuve, le premier échangeur de chaleur et le deuxième échangeur de chaleur comprenant chacun une première passe constitutive du premier circuit d'alimentation et une deuxième passe constitutive de la ligne de retour.

Autrement dit, le premier échangeur de chaleur et le deuxième échangeur de chaleur sont chacun configuré pour opérer un échange de chaleur entre le gaz circulant dans la ligne de retour à l'état vapeur et le gaz à l'état liquide circulant dans le premier circuit d'alimentation. Cette ligne de retour est disposée entre le compresseur et l'appareil consommateur de gaz à basse pression et elle s'étend jusqu'à la cuve. En sortie du compresseur, le gaz à l'état vapeur circuler à travers la ligne de retour si l'appareil consommateur de gaz à basse pression ne nécessite pas d'apport en carburant. Le gaz à l'état vapeur circulant dans la ligne de retour traverse dans un premier temps le deuxième échangeur de chaleur, puis le premier échangeur de chaleur, avant de retourner dans la cuve. Grâce à l'échange de calories s'opérant entre le gaz à l'état liquide circulant dans le premier circuit d'alimentation et le gaz à l'état vapeur circulant dans la ligne de retour, la température du gaz à l'état vapeur diminue en traversant les échangeurs de chaleur, jusqu'à ce que ledit gaz se condense et repasse à l'état liquide sensiblement en sortie du premier échangeur de chaleur. Le gaz recondensé circule alors jusqu'à la cuve. Le premier échangeur de chaleur est configuré pour condenser le gaz circulant au sein de la ligne de retour. Le premier échangeur de chaleur est l'échangeur traversé par le gaz à l'état liquide du premier circuit d'alimentation lorsque ledit gaz à l'état liquide est à sa température la plus basse. C'est donc l'échange de calories se déroulant au sein du premier échangeur de chaleur qui va changer l'état du gaz circulant dans la ligne de retour pour le faire passer de l'état vapeur à l'état liquide. Le deuxième échangeur de chaleur est quant à lui configuré pour pré-refroidir le gaz circulant au sein de la ligne de retour, préalablement à son passage au sein du premier échangeur de chaleur.

Selon une caractéristique optionnelle de l'invention, la ligne de pré-refroidissement est raccordée à la ligne de retour entre le premier échangeur de chaleur et une sortie de la ligne de retour configurée pour déboucher dans la cuve.

Autrement dit, la ligne de pré-refroidissement comprend une première extrémité piquée sur le premier circuit d'alimentation et une deuxième extrémité piquée sur la ligne de retour en sortie du premier échangeur de chaleur, plus précisément entre la deuxième passe de ce premier échangeur de chaleur et la cuve. Une telle configuration permet d'éviter la fabrication et la mise en place d'une portion de ligne dédiée jusqu'à la cuve.

Selon une caractéristique optionnelle de l'invention, le système d'alimentation comprend un système de mise en froid de la deuxième pompe, le système de mise en froid comprenant une ligne de mise en froid raccordée au premier circuit d'alimentation entre un port d'entrée de la deuxième pompe et le deuxième échangeur de chaleur, le système de mise en froid comprenant au moins une vanne de contrôle de la circulation du gaz au sein de la ligne de mise en froid.

Le système de mise en froid de la deuxième pompe est le pendant du système de pré-refroidissement du premier échangeur de chaleur. Le système de mise en froid de la deuxième pompe est ainsi utilisé lors de l'étape de préparation du système d'alimentation afin d'abaisser la température de la deuxième pompe préalablement à son fonctionnement au sein du système d'alimentation. À cet effet, le système de mise en froid prélève du gaz à l'état liquide et augmente le débit de ce gaz à l'état liquide traversant la deuxième pompe, de sorte à réaliser sa mise en température. La ligne de mise en froid est soit raccordée directement sur la deuxième pompe, soit raccordée sur le premier circuit d'alimentation entre cette deuxième pompe et le deuxième échangeur de chaleur.

Selon les cas, chronologiquement la mise en froid de la deuxième pompe par l'intermédiaire du système de mise en froid peut être mise en œuvre après le pré-refroidissement du premier échangeur de chaleur par le système de pré-refroidissement, simultanément à celui-ci ou encore avant celui-ci.

Selon une caractéristique optionnelle de l'invention, le système de mise en froid est configuré pour que la ligne de mise en froid débouche dans la cuve.

Autrement dit, la ligne de mise en froid s'étend entre la pompe et la cuve. La ligne de mise en froid peut, selon les modes de réalisation, déboucher en fond de cuve ou dans le ciel de cuve.

Selon une caractéristique optionnelle de l'invention, la ligne de mise en froid débouche dans la ligne de retour entre le premier échangeur de chaleur et la sortie de la ligne de retour configurée pour déboucher dans la cuve.

Ainsi, la ligne de mise en froid s'étend entre le port d'entrée de la deuxième pompe et la sortie de la deuxième passe du premier échangeur de chaleur. Après avoir pré-refroidi la deuxième pompe, le gaz à l'état liquide circule au sein de la ligne de mise en froid puis emprunte la ligne de retour pour être conduit jusqu'à la cuve. Une telle configuration permet d'éviter la fabrication et la mise en place d'une portion de ligne dédiée jusqu'à la cuve.

Pour les modes de réalisation où la ligne de retour débouche dans le fond de cuve, la sortie de cette ligne de retour peut être équipée d'un organe d'éjection tel qu'un organe de bullage. Cela permet de liquéfier au moins une partie du gaz à l'état vapeur lorsque ce dernier retourne dans la cuve, entraînant également une hausse de température du gaz sous forme liquide présent dans la cuve.

Selon une caractéristique optionnelle de l'invention, la ligne de retour comprend un organe de détente disposé entre le premier échangeur de chaleur et une sortie de la ligne de retour configurée pour déboucher dans la cuve.

L'organe de détente permet d'abaisser la pression du gaz circulant dans la ligne de retour, une fois celui-ci condensé lors de son passage à travers le premier échangeur de chaleur. Grâce à l'organe de détente, le gaz à l'état liquide est renvoyé dans la cuve à une température proche de la température de l'équilibre liquide -vapeur du gaz. L'organe de détente a également pour rôle de réguler le débit de gaz à condenser circulant dans la ligne de retour. Lorsque l'une et/ou l'autre de la ligne de pré-refroidissement et de la ligne de mise en froid débouchent dans la ligne de retour, elles sont raccordées entre cet organe de détente et la sortie de la ligne de retour, c'est-à-dire qu'elles sont raccordées en aval de l'organe de détente.

Selon une caractéristique optionnelle de l'invention, le système d'alimentation comprend une ligne de contournement du premier échangeur de chaleur, cette ligne de contournement comprenant un organe de régulation.

Cette ligne de contournement et l'organe de régulation dont elle est porteuse participent à former le système de contournement de la première passe du premier échangeur de chaleur.

L'invention concerne également un ouvrage flottant de stockage et/ou de transport de gaz à l'état liquide, comprenant au moins une cuve configurée pour contenir du gaz à l'état liquide, au moins un appareil consommateur de gaz à haute pression, au moins un appareil consommateur de gaz à basse pression et au moins un système d'alimentation en gaz de ces appareils consommateurs tel qu'évoqué précédemment.

L'invention couvre par ailleurs un système pour charger ou décharger un gaz liquide qui combine au moins une installation à terre et/ou portuaire et au moins un ouvrage flottant de stockage et/ou de transport de gaz liquide tel qu'évoqué précédemment.

L'invention est relative à un procédé de chargement ou de déchargement d'un gaz liquide d'un ouvrage flottant de stockage et/ou de transport de gaz tel qu'évoqué précédemment, dans lequel des canalisations de chargement et/ou de déchargement de gaz à l'état liquide disposées sur un pont supérieur de l'ouvrage flottant peuvent être raccordées, au moyen de connecteurs appropriés, à un terminal maritime ou portuaire afin de transférer le gaz à l'état liquide depuis ou vers la cuve.

L'invention concerne enfin un procédé d'alimentation d'un ouvrage flottant tel qu'évoqué précédemment par un système d'alimentation tel qu'évoqué précédemment, comprenant au moins une étape préalable de pré-refroidissement comprenant une sous-étape de prélèvement de gaz à l'état liquide dans la cuve, une sous-étape de refroidissement du premier échangeur de chaleur et une sous-étape de circulation du gaz au sein de la ligne de pré-refroidissement, le procédé d'alimentation comprenant une étape d'alimentation de l'appareil consommateur de gaz à haute pression par du gaz à l'état liquide prélevé dans la cuve.

Ainsi, l'étape de pré-refroidissement est nécessaire à la mise en œuvre du système d'alimentation en vue d'alimenter notamment son appareil consommateur de gaz à haute pression ; elle permet de mettre à température le premier échangeur de chaleur pour permettre une telle alimentation de l'appareil consommateur de gaz à haute pression, et permet par ailleurs, par la suite, la condensation du gaz circulant au sein de la ligne de retour.

Selon une caractéristique optionnelle de l'invention, au cours de l'étape de pré-refroidissement la vanne de régulation du système de pré-refroidissement est ouverte. L'ouverture de cette vanne de régulation permet au gaz d'emprunter la ligne de pré-refroidissement.

Selon une caractéristique optionnelle de l'invention, le procédé d'alimentation comprend au moins une étape de mise en froid préalable à l'étape d'alimentation, comprenant une sous-étape de prélèvement de gaz à l'état liquide dans la cuve, une sous-étape de mise en froid de la deuxième pompe et une sous-étape de circulation du gaz au sein de la ligne de mise en froid.

Au cours de cette étape de mise en froid, le gaz à l'état liquide circule soit au sein du premier échangeur de chaleur, et plus précisément de sa première passe, soit au sein de la ligne de contournement du circuit de contournement. **L'étape** de mise en froid est par exemple simultanée à l'étape de pré-refroidissement.

D'autres caractéristiques, détails et avantages de l'invention ressortiront plus clairement à la lecture de la description qui suit d'une part, et d'exemples de réalisation donnés à titre indicatif et non limitatif en référence aux dessins annexés d'autre part, sur lesquels :
[Fig. 1] illustre, schématiquement, un système d'alimentation en gaz selon l'invention selon un premier mode de réalisation ;
[Fig. 2] illustre, schématiquement, le système d'alimentation en gaz de la figure 1 selon un deuxième mode de réalisation ;
[Fig. 3] illustre, schématiquement, le système d'alimentation en gaz de la figure 1 selon un troisième mode de réalisation ;
[Fig. 4] illustre, schématiquement, le système d'alimentation en gaz de la figure 1 selon un quatrième mode de réalisation ;
[Fig. 5] illustre, schématiquement, le système d'alimentation en gaz de la figure 1 selon un cinquième mode de réalisation ;
[Fig. 6] illustre, schématiquement, une cuve d'un ouvrage flottant selon l'invention et d'un terminal de chargement et/ou de déchargement de cette cuve.

Les caractéristiques, variantes et les différentes formes de réalisation de l'invention peuvent être associées les unes avec les autres, selon diverses combinaisons, dans la mesure où elles ne sont pas incompatibles ou exclusives les unes par rapport aux autres. On pourra notamment imaginer des variantes de l'invention ne comprenant qu'une sélection de caractéristiques décrites par la suite de manière isolée des autres caractéristiques décrites, si cette sélection de caractéristiques est suffisante pour conférer un avantage technique et/ou pour différencier l'invention par rapport à l'état de la technique antérieur.

Sur les figures, les éléments communs à plusieurs figures conservent la même référence. Les termes « amont » et « aval » employés dans la description qui suit sont utilisés pour exprimer des positions de composants au sein de circuits de gaz à l'état liquide ou à l'état vapeur et se réfèrent au sens de circulation dudit gaz au sein dudit circuit.

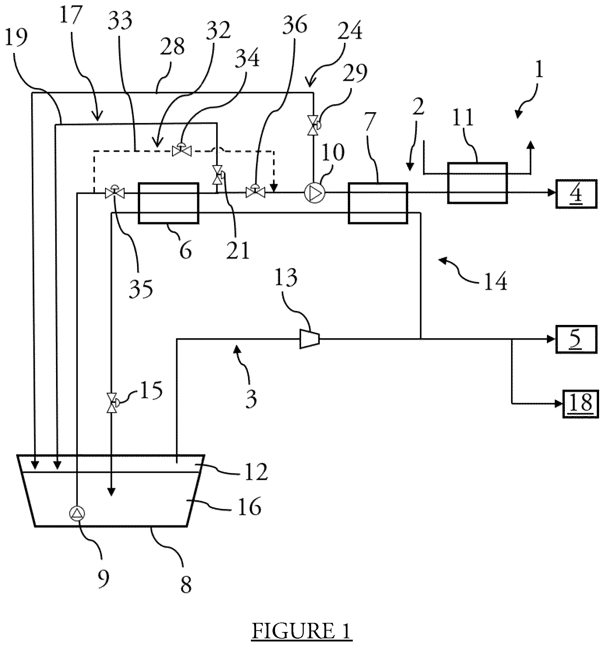

Les figures 1 à 5 illustrent ainsi, schématiquement, un système d'alimentation 1 en gaz selon l'invention, qui est ici intégré au sein d'un ouvrage flottant. Le système d'alimentation 1 permet de faire circuler du gaz pouvant être à l'état liquide, à l'état vapeur, à l'état diphasique ou à l'état supercritique, et ce à partir d'une cuve 8 de stockage et/ou de transport et jusqu'à un appareil consommateur de gaz à haute pression 4 et/ou un appareil consommateur de gaz à basse pression 5 afin d'alimenter ces derniers en carburant.

Ledit ouvrage flottant peut par exemple être un navire pouvant stocker et/ou transporter du gaz à l'état liquide. Le système d'alimentation 1 est dans ce cas apte à utiliser le gaz à l'état liquide que l'ouvrage flottant stocke et/ou transporte pour alimenter l'appareil consommateur de gaz à haute pression 4, lequel pouvant par exemple être un moteur de propulsion, et l'appareil consommateur de gaz à basse pression 5, lequel pouvant par exemple être un générateur électrique alimentant l'ouvrage flottant en électricité.

Afin d'assurer la circulation du gaz contenu dans la cuve 8 jusqu'à l'appareil consommateur de gaz à haute pression 4, le système d'alimentation 1 est pourvu d'un premier circuit d'alimentation 2 en gaz. Le premier circuit d'alimentation 2 comprend une première pompe 9 disposée au sein de la cuve 8. La première pompe 9 permet de pomper le gaz à l'état liquide et de le faire circuler notamment au sein du premier circuit d'alimentation 2. En aspirant le gaz à l'état liquide, la première pompe 9 permet également d'élever la pression de celui-ci à une valeur comprise entre 6 et 17 bars.

Le gaz à l'état liquide, selon un sens de circulation allant de la cuve 8 vers l'appareil consommateur de gaz à haute pression 4, traverse un premier échangeur de chaleur 6, est pompé par une deuxième pompe 10 et traverse un deuxième échangeur de chaleur 7. La deuxième pompe 10 permet d'élever la pression du gaz à l'état liquide à une valeur comprise entre 30 et 70 bars pour un usage avec du gaz de pétrole liquéfié, et de préférence entre 150 et 400 bars pour un usage avec de l'éthane, de l'éthylène ou encore avec du gaz naturel liquéfié constitué majoritairement de méthane.

À la suite de la traversée du deuxième échangeur de chaleur 7, le gaz circule jusqu'à un évaporateur haute pression 11. L'évaporateur haute pression 11 permet de modifier l'état du gaz circulant dans le premier circuit d'alimentation 2 afin de le faire passer à l'état vapeur ou supercritique. Un tel état permet au gaz d'être compatible pour alimenter l'appareil consommateur de gaz à haute pression 4. L'évaporation du gaz à l'état liquide peut par exemple se faire par échange de chaleur avec un fluide caloporteur à température suffisamment élevée pour évaporer le gaz à l'état liquide, ici de l'eau glycolée, de l'eau de mer ou de la vapeur d'eau.

Grâce à la combinaison de la deuxième pompe 10 et de l'évaporateur haute pression 11, le gaz est à une pression et dans un état compatible pour l'alimentation de l'appareil consommateur à haute pression 4. Une telle configuration permet d'éviter l'installation de compresseurs haute pression sur le premier circuit d'alimentation 2 qui présentent des contraintes de coûts et génèrent de fortes vibrations.

Au sein de la cuve 8, une partie de la cargaison de gaz peut naturellement passer à l'état vapeur et se diffuser dans un ciel de cuve 12, qui correspond à une partie haute de la cuve 8, par opposition à un fond de cuve 16 qui correspond à une partie basse de celle-ci. Afin d'éviter une surpression au sein de la cuve 8, le gaz à l'état vapeur contenu dans le ciel de cuve 12 doit être évacué. Or, le premier circuit d'alimentation 2 est configuré pour utiliser le gaz à l'état liquide pour alimenter l'appareil consommateur de gaz à haute pression 4.

Le système d'alimentation 1 comprend un deuxième circuit d'alimentation 3 en gaz, qui utilise le gaz à l'état vapeur pour alimenter l'appareil consommateur de gaz à basse pression 5. Le deuxième circuit d'alimentation 3 s'étend donc entre le ciel de cuve 12 et l'appareil consommateur de gaz à basse pression 5. Afin d'aspirer le gaz à l'état vapeur contenu dans le ciel de cuve 12, le deuxième circuit d'alimentation 3 comprend un compresseur 13. En plus d'aspirer le gaz à l'état vapeur, le compresseur 13 permet également d'élever une pression du gaz à l'état vapeur circulant dans le deuxième circuit d'alimentation 3 à une pression comprise entre 6 et 20 bars absolus, afin que le gaz à l'état vapeur soit à une pression compatible pour l'alimentation de l'appareil consommateur de gaz à basse pression 5. Le deuxième circuit d'alimentation 3 permet ainsi d'alimenter l'appareil consommateur de gaz à basse pression 5 tout en régulant la pression au sein de la cuve 8 en aspirant le gaz à l'état vapeur présent dans le ciel de cuve 12.

La présence du gaz à l'état vapeur en quantité excessive au sein du ciel de cuve 12 entraîne une surpression au sein de la cuve 8. Il est donc nécessaire d'évacuer le gaz à l'état vapeur dans le but d'abaisser la pression au sein de la cuve 8. Le gaz à l'état vapeur en excès peut alors par exemple être éliminé par un brûleur 18. Toutefois, le système d'alimentation 1 selon l'invention comprend une ligne de retour 14 qui s'étend du deuxième circuit d'alimentation 3 jusqu'à la cuve 8.

La ligne de retour 14 est raccordée sur le deuxième circuit d'alimentation 3 en aval du compresseur 13 par rapport à un sens de circulation du gaz à l'état vapeur circulant dans le deuxième circuit d'alimentation 3. Selon le sens de circulation du gaz à l'état vapeur circulant dans la ligne de retour 14, ledit gaz traverse le deuxième échangeur de chaleur 7 dans un premier temps, puis traverse le premier échangeur de chaleur 6. L'échange de calories s'effectuant au sein du premier échangeur de chaleur 6 et du deuxième échangeur de chaleur 7 est donc entre le gaz à l'état liquide circulant dans le premier circuit d'alimentation 2 et le gaz à l'état vapeur circulant dans la ligne de retour 14.

L'objectif de cet échange de calories est de condenser le gaz à l'état vapeur de la ligne de retour 14, afin que celui-ci passe à l'état liquide et retourne dans la cuve 8 dans cet état, au lieu d'être éliminé par le brûleur 18. Plus précisément, le gaz circulant dans la ligne de retour 14 est à l'état vapeur à l'entrée du premier échangeur de chaleur 6 et sort à l'état liquide du fait de l'échange de calories se déroulant au sein du premier échangeur de chaleur 6. On comprend de ce qui précède que le premier échangeur de chaleur 6 et le deuxième échangeur de chaleur 7 comprennent chacun une première passe constitutive du premier circuit d'alimentation 2 ainsi qu'une deuxième passe constitutive de la ligne de retour 14.

Afin d'aligner la pression du gaz circulant dans la ligne de retour 14 à la pression qui règne dans la cuve 8, la ligne de retour 14 peut comprendre un organe de détente 15, disposé entre le premier échangeur de chaleur 6 et une sortie de la ligne de retour 14 débouchant dans la cuve 8, qui abaisse la pression du gaz à une pression comprise entre 1 et 3 bars absolus. Une fois que le gaz est condensé dans le premier échangeur de chaleur 6 puis détendu dans l'organe de détente 15, celui-ci poursuit sa course jusqu'à la sortie de la ligne de retour 14, c'est-à-dire jusqu'à la cuve 8. Le premier échangeur de chaleur 6 fait donc office de condenseur ou recondenseur.

Le deuxième échangeur de chaleur 7 est situé en aval du premier échangeur de chaleur 6 selon le sens de circulation du gaz dans le premier circuit d'alimentation 2, et en amont du premier échangeur de chaleur 6 selon le sens de circulation du gaz dans la ligne de retour 14. Le deuxième échangeur de chaleur 7 assure donc un refroidissement préalable du gaz à l'état vapeur circulant dans la ligne de retour 14 avant que celui-ci soit condensé au sein du premier échangeur de chaleur 6 ; autrement dit, le deuxième échangeur de chaleur 7 est un pré-refroidisseur. Au niveau du premier circuit d'alimentation 2, le gaz à l'état liquide à l'entrée du deuxième échangeur de chaleur 7 a auparavant traversé le premier échangeur de chaleur 6 et a été pompé par la pompe additionnelle 10, ce qui a donc augmenté sa température et sa pression. Il est ainsi possible qu'à la suite de l'échange de calories se produisant au niveau du deuxième échangeur de chaleur 7, le gaz circulant au sein du premier circuit d'alimentation 2 sorte du deuxième échangeur de chaleur 7 dans un état diphasique. La température du gaz circulant dans la ligne de retour 14 est donc abaissée après la traversée du deuxième échangeur de chaleur 7, mettant en œuvre le refroidissement préalable indiqué plus haut en relation avec le deuxième échangeur de chaleur 7.

Il est à noter que pour pouvoir assurer de façon optimale et sans délai sa fonction de condenseur du gaz circulant dans la ligne de retour 14, le premier échangeur de chaleur 6 doit être pré-refroidi. Un tel pré-refroidissement, qui sera décrit par la suite en relation avec un procédé d'alimentation de l'ouvrage flottant 20, est une étape préalable à la mise en œuvre du premier échangeur de chaleur 6 en tant que condenseur de la ligne de retour 14.

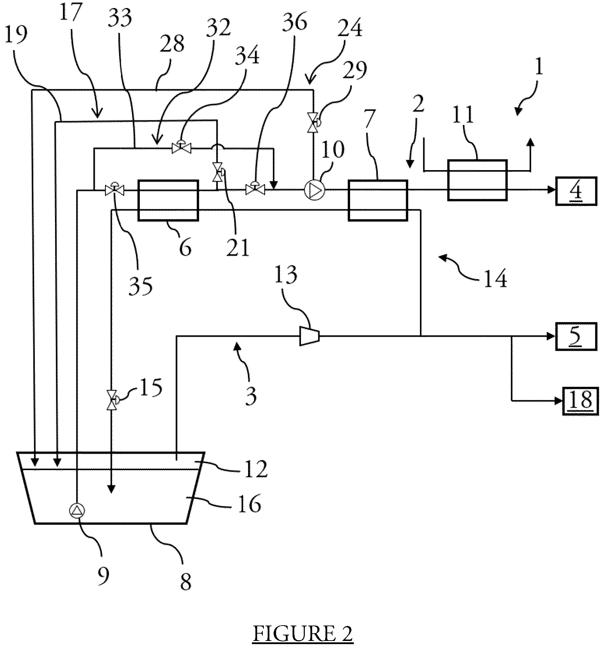

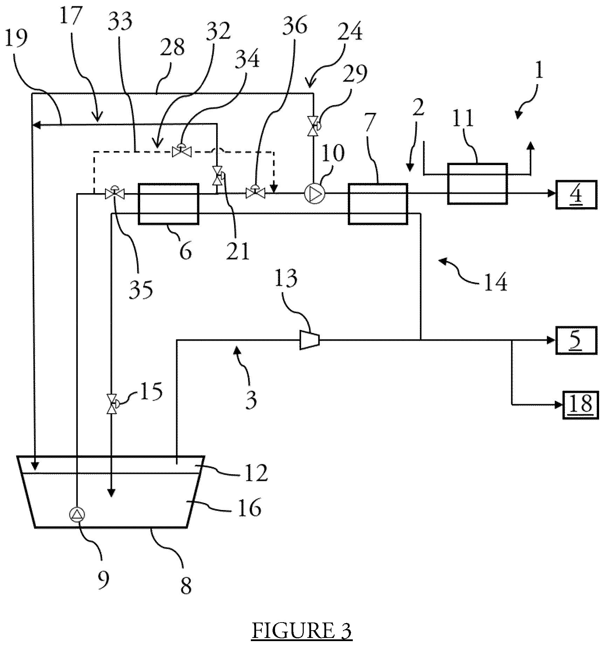

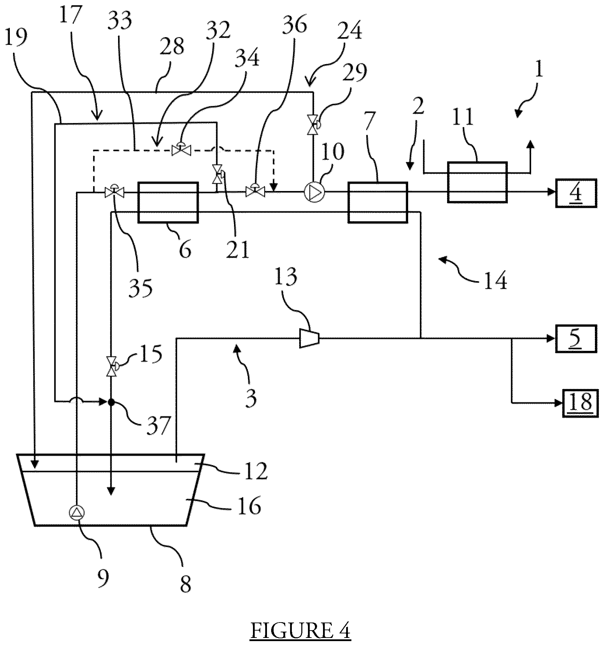

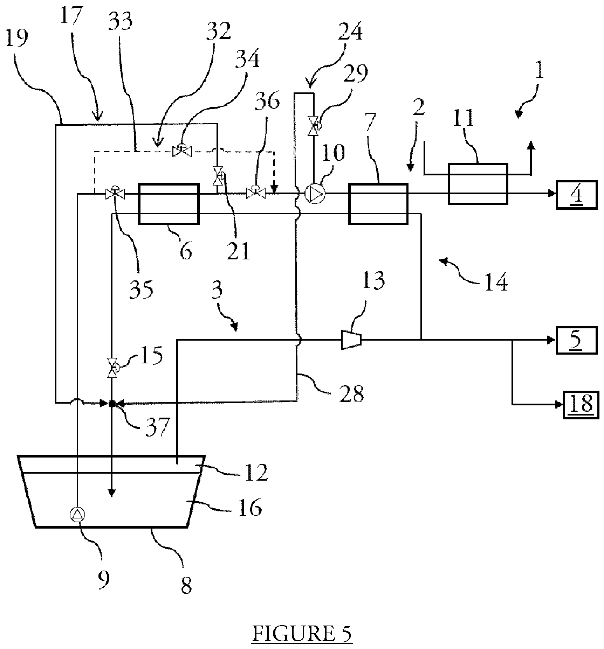

À cet effet, selon l'invention le système d'alimentation 1 comprend un système de pré-refroidissement 17 du premier échangeur de chaleur 6. Le système d'alimentation 1 et son système de pré-refroidissement 17 sont illustrés selon un premier mode de réalisation à la figure 1, selon un deuxième mode de réalisation à la figure 2, selon un troisième mode de réalisation à la figure 3, selon un quatrième mode de réalisation à la figure 4 et selon un cinquième mode de réalisation à la figure 5.

Le système de pré-refroidissement 17 comprend une ligne de pré-refroidissement 19 qui est raccordée différemment au sein du système d'alimentation 1 selon les modes de réalisation, ainsi qu'une vanne de régulation 21 de la circulation du gaz au sein de la ligne de pré-refroidissement 19. Cette vanne de régulation 21 est portée par la ligne de pré-refroidissement 19 et contrôle la circulation du gaz à l'état vapeur ou du gaz à l'état liquide en son sein.

Le système de pré-refroidissement 17 est configuré pour prélever du gaz à l'état liquide dans la cuve 8, le cas échéant à l'aide de la première pompe 9, et pour l'acheminer jusqu'au premier échangeur de chaleur 6. Le gaz à l'état liquide est acheminé jusqu'au premier échangeur de chaleur 6 par l'intermédiaire d'une conduite du premier circuit d'alimentation 2 reliant la cuve 8 au premier échangeur de chaleur 6. Cette conduite participe donc à la fois à l'alimentation de l'appareil consommateur de gaz à haute pression 4 et au pré-refroidissement du premier échangeur de chaleur 6. Le premier échangeur de chaleur 6 est pré-refroidi lorsqu'il est traversé par le gaz à l'état liquide ; on comprend ainsi que plus un débit de gaz à l'état liquide traversant le premier échangeur de chaleur 6 est important, plus la température de ce premier échangeur de chaleur 6 sera abaissée rapidement.

Outre le système de pré-refroidissement 17, le système d'alimentation 1 comprend un système de mise en froid 24 de la deuxième pompe 10 ; ce système de mise en froid 24 permet, au cours d'une étape préalable à l'alimentation de l'appareil consommateur de gaz à haute pression 4, de faire circuler du gaz à l'état liquide au sein de la deuxième pompe 10 pour l'amener à une température adaptée. Le système de mise en froid 24 comprend d'une part une ligne de mise en froid 28 et d'autre part une vanne de contrôle 29 qui est portée par la ligne de mise en froid 28. On comprend que la vanne de contrôle 29 contrôle la circulation du gaz au sein de la ligne de mise en froid 28.

Le système de mise en froid 24 est configuré pour prélever du gaz à l'état liquide dans la cuve 8, le cas échéant à l'aide de la première pompe 9, et pour l'acheminer jusqu'à la deuxième pompe 10. Le gaz à l'état liquide est acheminé jusqu'à la deuxième pompe 10 notamment par l'intermédiaire de la conduite du premier circuit d'alimentation 2 qui relie la cuve 8 au premier échangeur de chaleur 6. Cette conduite participe donc à la fois à l'alimentation de l'appareil consommateur de gaz à haute pression 4, au pré-refroidissement du premier échangeur de chaleur 6 et à la mise en froid de la deuxième pompe 10.

La ligne de mise en froid 28 est raccordée au premier circuit d'alimentation 2 entre un port d'entrée de la deuxième pompe 10 et le deuxième échangeur de chaleur 7. Ainsi, soit la ligne de mise en froid 28 est raccordée sur la deuxième pompe 10, tel que cela est illustré sur les figures, soit elle est raccordée au premier circuit d'alimentation 2 entre une sortie de cette deuxième pompe 10 et une entrée du deuxième échangeur de chaleur 7.

La vanne de contrôle 29 est une vanne proportionnelle, qui présente une configuration totalement ouverte, une configuration fermée, et au moins une configuration intermédiaire dans laquelle elle est partiellement ouverte. Lorsque la vanne de contrôle est dans sa configuration fermée, le passage de gaz à l'état liquide au sein de la ligne de mise en froid 28 est empêché. À l'inverse, lors de la mise en froid de la deuxième pompe 10 la vanne de contrôle 29 est dans sa configuration totalement ouverte.

La ligne de mise en froid 28 s'étend, pour les quatre premiers modes de réalisation, du premier circuit d'alimentation 1 jusqu'à la cuve 8. Sur les modes de réalisation des figures 1 à 4, la ligne de mise en froid 28 s'étend plus précisément jusqu'à la portion haute de la cuve 8, c'est-à-dire qu'elle débouche dans le ciel de cuve 12. On pourrait cependant, sans sortir du cadre de l'invention, envisager des variantes de réalisation dans lesquelles la ligne de mise en froid 28 déboucherait dans le fond de cuve 16. Il est à noter que la vanne de contrôle 29 qui régit le passage de gaz au sein de la ligne de mise en froid 28 a une fonction de détente du gaz à l'état liquide. Ainsi, le gaz à l'état liquide circulant dans la ligne de mise en froid 28 présente une pression de l'ordre de 9 bars entre la deuxième pompe 10 et la vanne de contrôle 29, c'est-à-dire en amont de cette vanne de contrôle 29, et une pression inférieure à 2 bars, soit proche de celle du gaz à l'état liquide dans la cuve 8, entre la vanne de contrôle 29 et la cuve 8, c'est-à-dire en aval de la vanne de contrôle 29.

En ce qui concerne le système de pré-refroidissement 17, dans les cinq modes de réalisation présentés ici la ligne de pré-refroidissement 19 du premier échangeur de chaleur 6 est raccordée au premier circuit d'alimentation 2 entre ce premier échangeur de chaleur 6 et la deuxième pompe 10. La vanne de régulation 21 comprend une configuration ouverte, dans laquelle le gaz peut circuler au sein de la ligne de pré-refroidissement 19, et une configuration fermée dans laquelle une telle circulation est interdite. On comprend que dans cette configuration ouverte, le gaz est au moins partiellement dévié vers la ligne de pré-refroidissement 19, tandis que dans la configuration fermée le gaz circule jusqu'à la deuxième pompe 10. Le circuit de pré-refroidissement 17 permet ainsi d'augmenter le débit de gaz circulant au sein du premier échangeur de chaleur 6 sans impact sur le débit de gaz qui est envoyé à la deuxième pompe 10, un surplus de débit de gaz étant dévié dans la ligne de pré-refroidissement 19.

Dans le premier mode de réalisation et dans le deuxième mode de réalisation, qui sont respectivement illustrés aux figures 1 et 2, la ligne de pré-refroidissement 19 s'étend entre le premier échangeur de chaleur 6 et la deuxième pompe 10 d'une part et la cuve 8 d'autre part. Autrement dit, la ligne de pré-refroidissement 19 s'étend du premier circuit d'alimentation 2 jusqu'à la cuve 8. Sur les figures 1 et 2, la ligne de pré-refroidissement 19 s'étend plus précisément jusqu'à la portion haute de la cuve 8, c'est-à-dire qu'elle débouche dans le ciel de cuve 12. Tel que cela a été précisé pour la ligne de mise en froid 28, on pourrait toutefois envisager des variantes de réalisation dans lesquelles la ligne de pré-refroidissement 19 déboucherait dans le fond de cuve 16.

Il est à noter que dans le deuxième mode de réalisation, le système d'alimentation 1 utilise un circuit de contournement 32 du premier échangeur de chaleur 6. Ce circuit de contournement 32 comprend une ligne de contournement 33 disposée en parallèle de la première passe du premier échangeur de chaleur 6, ainsi qu'un organe de régulation 34 porté par ladite ligne de contournement 33.

Le circuit de contournement 32 permet d'éviter le passage de gaz au sein du premier échangeur de chaleur 6, notamment en vue d'une purge de celui-ci, par exemple au cours d'une opération de maintenance dudit premier échangeur de chaleur 6. Pour ce faire, le circuit de contournement 32 est utilisé conjointement à des valves disposées sur le premier circuit d'alimentation 2 de part et d'autre du premier échangeur de chaleur 6, avec plus précisément une première valve 35 disposée en amont de l'échanger de chaleur 6 et une deuxième valve 36 disposée en aval de celui-ci. Comme cela est illustré à la figure 2, la ligne de contournement 33 est piquée sur le premier circuit d'alimentation 2 en amont de la première valve 35 ainsi qu'en aval de la deuxième valve 36. Autrement dit, la ligne de contournement 33 s'étend en parallèle du premier circuit d'alimentation 2 entre d'une part un premier point entre la cuve 8 et le premier échangeur de chaleur 6, plus précisément entre la cuve 8 et la première valve 35, et d'autre part un deuxième point entre le premier échangeur de chaleur 6 et la deuxième pompe 10, plus particulièrement entre la deuxième valve 36 et la deuxième pompe 10. On comprend que les première et deuxième valves 35, 36 ne sont pas intégrées au circuit de contournement 32 mais qu'elles font partie d'une portion du premier circuit d'alimentation 2 que le circuit de contournement 32 permet d'éviter.

L'organe de régulation 34, lorsqu'il est ouvert, permet un passage de gaz à l'état liquide au sein de la ligne de contournement 33. La première valve 35 autorise un passage de gaz à l'état liquide au sein de la première passe du premier échangeur de chaleur 6 lorsqu'elle est ouverte et empêche un tel passage lorsqu'elle est fermée. La deuxième valve 35 autorise la circulation du gaz jusqu'à la deuxième pompe 10 et par extension jusqu'à l'appareil consommateur de gaz à haute pression 4 lorsqu'elle est ouverte et empêche un tel passage lorsqu'elle est fermée. Il résulte de ce qui précède que la purge du premier échangeur de chaleur 6 est mise en œuvre lorsque l'organe de régulation 34 est ouvert, la première valve 35 est fermée et lorsque le système de pré-refroidissement 17 est en fonctionnement, c'est-à-dire lorsque la vanne de régulation 21 est dans sa configuration ouverte.

Il est à noter que le circuit de contournement 32 peut également être utilisé lorsque le premier échangeur de chaleur 6 présente des températures trop élevées qui risqueraient de vaporiser le gaz circulant en son sein, ce qui risquerait d'endommager la deuxième pompe 10 qui serait alors alimentée en gaz à l'état vapeur plutôt qu'en gaz à l'état liquide. Le circuit de contournement 32 permet, dans ce contexte, de contourner le premier échangeur de chaleur 6 et ainsi de s'assurer que la deuxième pompe 10 est toujours alimentée en gaz à l'état liquide de sorte à permettre son fonctionnement optimal.

Par ailleurs, grâce au deuxième mode de réalisation de la figure 2, il est possible d'effectuer, de façon simultanée, une alimentation de l'appareil consommateur de gaz à haute pression 4 et un pré-refroidissement du premier échangeur de chaleur 6. Dans ce cas, l'organe de régulation 34 est ouvert, de sorte que du gaz à l'état liquide puisse circuler dans la ligne de contournement 33 puis de nouveau au sein du premier circuit d'alimentation 2 jusqu'à l'appareil consommateur de gaz à haute pression 4. La deuxième valve 36 est fermée afin d'éviter un reflux du gaz vers le premier échangeur de chaleur 6. En parallèle, la première valve 35 est ouverte, de sorte qu'une portion de gaz à l'état liquide en provenance de la cuve 8 traverse le premier échangeur de chaleur 6 avant de circuler au sein de la ligne de pré-refroidissement 19. Pour ce faire, la vanne de régulation 21 de cette ligne de pré-refroidissement 19 est dans sa configuration ouverte. Un mélange entre le gaz ayant traversé le premier échangeur de chaleur 6 et le gaz ayant circulé au sein de la ligne de contournement 33 est empêché par la deuxième valve 36 qui est fermée. Le deuxième mode de réalisation permet donc de gérer le pré-refroidissement du premier échangeur de chaleur 6 tout en alimentant l'appareil consommateur de gaz à haute pression 4, ce qui permet notamment de démarrer l'ouvrage flottant simultanément à la mise en température du premier échangeur de chaleur 6.

Le troisième mode de réalisation, qui est illustré à la figure 3, diffère du premier mode de réalisation de la figure 1 en ce que la ligne de pré-refroidissement 19 n'est pas reliée directement à la cuve 8 ; autrement dit, la ligne de pré-refroidissement 19 ne débouche pas dans la cuve 8. Ici au contraire, la ligne de pré-refroidissement 19 est raccordée à la ligne de mise en froid 28. Plus précisément, la ligne de pré-refroidissement 19 est raccordée à la ligne de mise en froid 28 en aval de la vanne de contrôle 29, c'est-à-dire entre cette vanne de contrôle 29 et la cuve 8. La ligne de pré-refroidissement 19 s'étend alors du premier circuit d'alimentation 2 à la ligne de mise en froid 28.

Dans le quatrième mode de réalisation, représenté en figure 4, la ligne de pré-refroidissement 19 ne débouche pas non plus directement dans la cuve 8. Ici, la ligne de pré-refroidissement 19 est raccordée à la ligne de retour 14 par un point de convergence 37. Plus particulièrement, la ligne de pré-refroidissement 19 est raccordée à la ligne de retour 14 au niveau du point de convergence 37 en aval de l'organe de détente 15, c'est-à-dire entre cet organe de détente 15 et la sortie de la ligne de retour 14 qui débouche dans la cuve 8. Le cas échéant, la sortie de la ligne de retour 14 peut être équipée d'un organe d'éjection tel qu'un organe de bullage, non représenté ici. Dans ce quatrième mode de réalisation, tel que cela a été évoqué précédemment la ligne de mise en froid 28 débouche dans la cuve 8.

Le cinquième mode de réalisation, illustré en figure 5, est une variante du quatrième mode de réalisation. En effet, dans ce cinquième mode de réalisation la ligne de pré-refroidissement 19 est raccordée à la ligne de retour 14 en aval de l'organe de détente 15 au sein du point de convergence 37 comme c'est le cas dans le quatrième mode de réalisation. Le cinquième mode de réalisation diffère toutefois de ce quatrième mode de réalisation pour ce qui est du raccordement de la ligne de mise en froid 28. Ainsi, ici la ligne de mise en froid 28 est elle aussi raccordée à la ligne de retour 14 au niveau du point de convergence 37. Il résulte de ce qui précède que la ligne de pré-refroidissement 19 et la ligne de mise en froid 28 sont toutes deux raccordées à la ligne de retour 14 par le point de convergence 37.

Il est à noter que dès lors qu'elles ne sont pas incompatibles, les caractéristiques présentées en relation avec l'un des cinq modes de réalisation sont sauf mention contraire susceptibles de s'appliquer, *mutatis mutandis,* à un ou plusieurs autres de ces modes de réalisation sans sortir du cadre de l'invention.

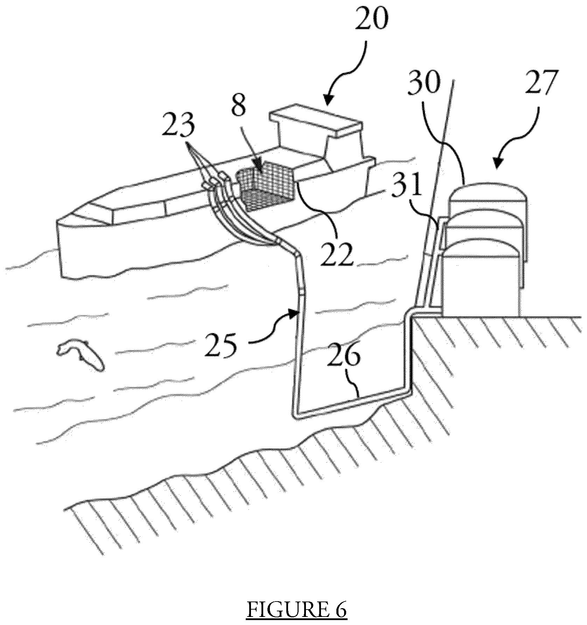

La figure 6 est une vue écorchée d'un ouvrage flottant 20 qui montre la cuve 8 qui contient le gaz à l'état liquide et à l'état vapeur, cette cuve 8 étant de forme générale prismatique montée dans une double coque 22 de l'ouvrage flottant 20. La paroi de la cuve 8 comporte une membrane d'étanchéité primaire destinée à être en contact avec le gaz à l'état liquide contenu dans la cuve 8, une membrane d'étanchéité secondaire agencée entre la membrane d'étanchéité primaire et la double coque 22 de l'ouvrage flottant 20, et deux barrières thermiquement isolantes agencées respectivement entre la membrane d'étanchéité primaire et la membrane d'étanchéité secondaire et entre la membrane d'étanchéité secondaire et la double coque 22.

Des canalisations 23 de chargement et/ou de déchargement de gaz à l'état liquide disposées sur le pont supérieur de l'ouvrage flottant 20 peuvent être raccordées, au moyen de connecteurs appropriés, à un terminal maritime ou portuaire pour transférer la cargaison de gaz à l'état liquide depuis ou vers la cuve 8.

La figure 6 représente également un exemple de terminal maritime ou portuaire comportant un équipement de chargement et/ou de déchargement 25, une conduite sous-marine 26 et une installation à terre et/ou portuaire 27. L'installation à terre et/ou portuaire 27 peut par exemple être agencée sur le quai d'un port, ou selon un autre exemple être agencée sur une plate-forme gravitaire en béton. L'installation à terre et/ou portuaire 27 comporte des cuves de stockage de gaz à l'état liquide 30 et des conduites de liaison 31 reliées par la conduite sous-marine 26 à l'équipement de chargement et/ou de déchargement 25.

Pour engendrer la pression nécessaire au transfert du gaz à l'état liquide, on met en œuvre des pompes équipant l'installation à terre et/ou portuaire 27 et/ou des pompes équipant l'ouvrage flottant 20.

Un procédé d'alimentation de l'ouvrage flottant 20 à l'aide du système d'alimentation 1 va maintenant être décrit. Un tel procédé d'alimentation comprend deux parties distinctes, à savoir une première partie qui correspond à une préparation du système d'alimentation 1 et une deuxième partie qui est l'alimentation en tant que telle de l'un et/ou l'autre des appareils consommateurs 4, 5.

Ainsi, le procédé d'alimentation comprend une étape de pré-refroidissement du premier échangeur de chaleur 6 qui est préalable à une étape d'alimentation de l'un et/ou l'autre des appareils consommateurs de gaz 4, 5. Le procédé d'alimentation comprend également ici une étape de mise en froid de la deuxième pompe 10, qui est elle aussi préalable à l'étape d'alimentation des appareils consommateurs de gaz 4, 5.

L'étape de pré-refroidissement permet la mise à température du premier échangeur de chaleur 6. Cette étape de pré-refroidissement débute par une sous-étape de prélèvement de gaz à l'état liquide dans la cuve 8, au cours de laquelle du gaz à l'état liquide est prélevé dans la cuve 8 à l'aide par exemple de la première pompe 9 puis circule au sein du premier circuit d'alimentation 2 jusqu'au premier échangeur de chaleur 6. L'étape de pré-refroidissement comprend ensuite une sous-étape de refroidissement du premier échangeur de chaleur 6, qui correspond à une circulation du gaz à l'état liquide à travers l'échangeur de chaleur 6. Le gaz est ensuite évacué du premier échangeur de chaleur 6 et circule dans la ligne de pré-refroidissement 19 en vue de son retour vers la cuve 8 au cours d'une sous-étape de circulation. À cet effet, la vanne de régulation 21 est dans sa configuration ouverte. Le gaz est renvoyé vers la cuve 8 soit directement, comme c'est le cas pour les premier et deuxième modes de réalisation ; soit par l'intermédiaire de la ligne de mise en froid 28 comme décrit précédemment pour le troisième mode de réalisation ; soit enfin par l'intermédiaire de la ligne de retour 14 dans le cadre des quatrième et cinquième modes de réalisation.

Au cours de l'étape de pré-refroidissement selon les premier, troisième, quatrième et cinquième modes de réalisation, le circuit de contournement 32 n'est pas utilisé, de sorte que l'organe de régulation 34 est fermé. À l'inverse, la première valve 35 et la deuxième valve 36 sont toutes deux ouvertes.

Les sous-étapes de prélèvement, de pré-refroidissement et de circulation sont mises en œuvre de façon continue et simultanée jusqu'à l'obtention d'une température de - 140 °C au sein du premier échangeur de chaleur 6. Le temps nécessaire à l'obtention d'une telle température est par exemple d'une heure, une telle durée étant ici améliorée grâce à l'augmentation de débit au sein du premier échangeur de chaleur 6 que permet le système de pré-refroidissement 17. Il est à noter qu'au début de l'étape de pré-refroidissement, le premier échangeur de chaleur 6 présente une température particulièrement élevée ; de fait, il vaporise le gaz à l'état liquide qui lui est délivré, et c'est donc du gaz à l'état vapeur qui circule au sein de la ligne de pré-refroidissement 19. À l'inverse, à la fin de l'étape de pré-refroidissement, c'est-à-dire lorsque le premier échangeur de chaleur 6 avoisine sa température de fonctionnement de - 140 °C, il n'y a pas de vaporisation au sein du premier échangeur de chaleur 6 et le gaz qui circule dans la ligne de pré-refroidissement 19 est donc à l'état liquide.

En parallèle de l'étape de pré-refroidissement, le procédé d'alimentation met en œuvre l'étape de mise en froid, qui permet la mise à température de la deuxième pompe 10. Cette étape de mise en froid présente, similairement à l'étape de pré-refroidissement, une sous-étape de prélèvement de gaz à l'état liquide dans la cuve 8 au cours de laquelle du gaz à l'état liquide est prélevé dans la cuve 8 à l'aide par exemple de la première pompe 9 puis circule au sein du premier circuit d'alimentation 2 jusqu'à la deuxième pompe 10. L'étape de mise en froid comprend par la suite une sous-étape de mise en froid de la deuxième pompe 10, qui correspond à une traversée de ladite deuxième pompe 10 par le gaz à l'état liquide. L'étape de mise en froid s'achève par une sous-étape de circulation du gaz ayant refroidi la deuxième pompe 10 au sein de la ligne de mise en froid 28, une telle circulation étant permise car la vanne de contrôle est dans sa configuration totalement ouverte.

De la même façon que pour l'étape de pré-refroidissement, au cours de l'étape de mise en froid les sous-étapes de prélèvement, de mise en froid et de circulation sont mises en œuvre simultanément et répétées jusqu'à l'obtention d'une température souhaitée pour la deuxième pompe 10. Le temps nécessaire à l'obtention d'une telle mise à température du premier échangeur de chaleur 6 et de la deuxième pompe 10 est par exemple d'une heure, une telle durée étant ici améliorée grâce à l'augmentation de débit au sein du premier échangeur de chaleur 6 que permet le système de pré-refroidissement 17, égalisant ainsi les durées de mise en froid du premier échangeur de chaleur 6 et de la deuxième pompe 10.

Une fois que le premier échangeur de chaleur 6 a été amené à sa température de fonctionnement, l'étape de pré-refroidissement est achevée par le passage de la vanne de régulation 21 de sa configuration ouverte à sa configuration fermée. De la même façon, l'étape de mise en froid de la deuxième pompe 10 s'achève par le passage de la vanne de contrôle 29 de sa configuration totalement ouverte à sa configuration partiellement ouverte, qui est compatible avec une pression de fonctionnement normale de l'appareil consommateur de gaz à haute pression 4.

La mise en œuvre de l'étape d'alimentation du procédé d'alimentation est alors possible. Au cours de cette étape d'alimentation, du gaz à l'état liquide est prélevé dans la cuve 8 et circule au sein du premier circuit d'alimentation 2 de sorte à traverser successivement le premier échangeur de chaleur 6, la deuxième pompe 10, le deuxième échangeur de chaleur 7 et l'évaporateur haute pression 11 conformément à ce qui a été décrit précédemment afin d'être acheminé jusqu'à l'appareil consommateur de gaz à haute pression 4 pour l'alimenter.

De façon notable, dans le cas particulier du deuxième mode de réalisation l'étape de pré-refroidissement et l'étape d'alimentation sont mises en œuvre de façon simultanée. Lors du procédé d'alimentation selon ce deuxième mode de réalisation, au cours de la sous-étape de prélèvement de l'étape de pré-refroidissement au moins une portion du gaz à l'état liquide prélevé dans la cuve 8 est déviée du premier échangeur de chaleur 6 en circulant *via* la ligne de contournement 33 afin d'être acheminée jusqu'à l'appareil consommateur de gaz à haute pression. Dans ce cas, contrairement à ce qui a été décrit ci-avant, l'organe de régulation 34 est ouvert et la deuxième valve 36 est fermée.

La présente invention propose ainsi un système d'alimentation en gaz au sein duquel la mise en température d'un échangeur de chaleur est opérée indépendamment de la mise en température d'autres composants, un temps nécessaire à cette mise en température étant réduit en augmentant le débit de gaz circulant au sein de l'échangeur de chaleur.

La présente invention ne saurait toutefois se limiter aux moyens et configurations décrits et illustrés ici et elle s'étend également à tout moyen et toute configuration équivalents ainsi qu'à toute combinaison techniquement opérante de tels moyens.

## Revendications

1. Système d'alimentation (1) en gaz d'au moins un appareil consommateur de gaz à haute pression (4) et d'au moins un appareil consommateur de gaz à basse pression (5) d'un ouvrage flottant (20) comprenant au moins une cuve (8) configurée pour contenir le gaz, le système d'alimentation (1) comprenant :
- au moins un premier circuit d'alimentation (2) en gaz de l'appareil consommateur de gaz à haute pression (4), comprenant au moins une première pompe (9) configurée pour pomper le gaz prélevé à l'état liquide dans la cuve (8), au moins un premier échangeur de chaleur (6), un deuxième échangeur de chaleur (7), une deuxième pompe (10) disposée entre le premier échangeur de chaleur (6) et le deuxième échangeur de chaleur (7) et au moins un évaporateur haute pression (11) configuré pour évaporer le gaz circulant dans le premier circuit d'alimentation (2) en gaz ;
- au moins un deuxième circuit d'alimentation (3) en gaz de l'appareil consommateur de gaz à basse pression (5), comprenant au moins un compresseur (13) configuré pour comprimer du gaz prélevé à l'état vapeur dans la cuve (8) jusqu'à une pression de fonctionnement de l'appareil consommateur de gaz à basse pression (5),
**caractérisé en ce que** le système d'alimentation (1) comprend un système de pré-refroidissement (17) du premier échangeur de chaleur (6) configuré pour prélever du gaz à l'état liquide dans la cuve (8), le système de pré-refroidissement (17) comprenant une ligne de pré-refroidissement (19) raccordée au premier circuit d'alimentation (2) entre le premier échangeur de chaleur (6) et la deuxième pompe (10), le système de pré-refroidissement (17) comprenant au moins une vanne de régulation (21) de la circulation du gaz au sein de la ligne de pré-refroidissement (19).

2. Système d'alimentation (1) selon la revendication **1,** dans lequel le premier circuit d'alimentation (2) comprend une première valve (35) disposée entre la première pompe (9) et le premier échangeur de chaleur (6) et une deuxième valve (36) disposée entre le premier échangeur de chaleur (6) et la deuxième pompe (10), la ligne de pré-refroidissement (19) étant raccordée au premier circuit d'alimentation (2) entre le premier échangeur de chaleur (6) et la deuxième valve (36).

3. Système d'alimentation (1) selon l'une quelconque des revendications 1 et 2, dans lequel le système de pré-refroidissement (17) est configuré pour que la ligne de pré-refroidissement (19) débouche dans une portion inférieure de la cuve (8).

4. Système d'alimentation (1) selon l'une quelconque des revendications 1 et 2, dans lequel le système de pré-refroidissement (17) est configuré pour que la ligne de pré-refroidissement (19) débouche dans une portion supérieure de la cuve (8).

5. Système d'alimentation (1) selon l'une quelconque des revendications 1 à 4, comprenant une ligne de retour (14) de gaz connectée au deuxième circuit d'alimentation (3) et configurée pour ramener le gaz jusqu'à la cuve (8), le premier échangeur de chaleur (6) et le deuxième échangeur de chaleur (7) comprenant chacun une première passe constitutive du premier circuit d'alimentation (2) et une deuxième passe constitutive de la ligne de retour (14).

6. Système d'alimentation (1) selon la revendication 5, dans lequel la ligne de pré-refroidissement (19) est raccordée à la ligne de retour (14) entre le premier échangeur de chaleur (6) et une sortie de la ligne de retour (14) configurée pour déboucher dans la cuve (8).

7. Système d'alimentation (1) selon l'une quelconque des revendications 1 à 6, comprenant un système de mise en froid (24) de la deuxième pompe (10), le système de mise en froid (24) comprenant une ligne de mise en froid (28) raccordée au premier circuit d'alimentation (2) entre un port d'entrée de la deuxième pompe (10) et le deuxième échangeur de chaleur (7), le système de mise en froid (24) comprenant au moins une vanne de contrôle (29) de la circulation du gaz au sein de la ligne de mise en froid (28).

8. Système d'alimentation (1) selon la revendication 7, dans lequel le système de mise en froid (24) est configuré pour que la ligne de mise en froid (28) débouche dans la cuve (8).

9. Système d'alimentation (1) selon la revendication 7 en combinaison avec la revendication 5, dans lequel la ligne de mise en froid (28) débouche dans la ligne de retour (14) entre le premier échangeur de chaleur (6) et la sortie de la ligne de retour (14) configurée pour déboucher dans la cuve (8).

10. Système d'alimentation (1) selon l'une quelconque des revendications 1 à 9 en combinaison avec la revendication 5, dans lequel la ligne de retour (14) comprend un organe de détente (15) disposé entre le premier échangeur de chaleur (6) et une sortie de la ligne de retour (14) configurée pour déboucher dans la cuve (8).

11. Système d'alimentation (1) selon l'une quelconque des revendications 1 à 10, comprenant une ligne de contournement (33) du premier échangeur de chaleur (6), cette ligne de contournement (33) comprenant un organe de régulation (34).

12. Ouvrage flottant (20) de stockage et/ou de transport de gaz à l'état liquide, comprenant au moins une cuve (8) configurée pour contenir du gaz à l'état liquide, au moins un appareil consommateur de gaz à haute pression (4), au moins un appareil consommateur de gaz à basse pression (5) et au moins un système d'alimentation (1) en gaz de ces appareils consommateurs (4, 5) selon l'une quelconque des revendications 1 à 11.

13. Système pour charger ou décharger un gaz liquide qui combine au moins une installation à terre et/ou portuaire (27) et au moins un ouvrage flottant (20) de stockage et/ou de transport de gaz liquide selon la revendication précédente.

14. Procédé de chargement ou de déchargement d'un gaz liquide d'un ouvrage flottant (20) de stockage et/ou de transport de gaz selon la revendication 12, dans lequel des canalisations de chargement et/ou de déchargement (23) de gaz à l'état liquide disposées sur un pont supérieur de l'ouvrage flottant (20) peuvent être raccordées, au moyen de connecteurs appropriés, à un terminal maritime ou portuaire afin de transférer le gaz à l'état liquide depuis ou vers la cuve (8).

15. Procédé d'alimentation d'un ouvrage flottant (20) selon la revendication 12 par un système d'alimentation (1), comprenant au moins une étape préalable de pré-refroidissement comprenant une sous-étape de prélèvement de gaz à l'état liquide dans la cuve (8), une sous-étape de refroidissement du premier échangeur de chaleur (6) et une sous-étape de circulation du gaz au sein de la ligne de pré-refroidissement (19), le procédé d'alimentation comprenant une étape d'alimentation de l'appareil consommateur de gaz à haute pression (4) par du gaz à l'état liquide prélevé dans la cuve (8).

16. Procédé d'alimentation selon la revendication 15, dans lequel au cours de l'étape de pré-refroidissement la vanne de régulation (21) du système de pré-refroidissement (17) est ouverte.

17. Procédé d'alimentation selon l'une quelconque des revendications 15 et 16, comprenant au moins une étape de mise en froid préalable à l'étape d'alimentation, comprenant une sous-étape de prélèvement de gaz à l'état liquide dans la cuve (8), une sous-étape de mise en froid de la deuxième pompe (10) et une sous-étape de circulation du gaz au sein de la ligne de mise en froid (28).
